# EUROPEAN PATENT SPECIFICATION

(11) **EP 1 533 280 B1**
(45) Date of publication and mention of the grant of the patent: **17.01.2007**
(21) Application number: 03792636.7
(22) Date of filing: 24.07.2003
(51) Int. Cl.: C03B 23/033, C03B 27/044

(54) **METHOD AND DEVICE FOR FORMING MULTI-CURVED GLASS SHEET**
VERFAHREN UND VORRICHTUNG ZUR HERSTELLUNG VON MEHRFACH GEKRÜMMTEN GLASSCHEIBEN
PROCEDE ET DISPOSITIF DE FORMATION DE FEUILLE DE VERRE MULTI-COURBE

(30) Priority: 22.08.2002 JP 2002242136
(43) Date of publication of application: 25.05.2005
(73) Proprietor: Nippon Sheet Glass Co., Ltd., Osaka-shi, Osaka 541-0041 (JP)
(72) Inventor: YOSHIZAWA, Hideo, Nippon Sheet Glass Co., Ltd., Osaka-shi, Osaka 541-0041 (JP)
(74) Representative: Power, Philippa Louise
(86) International application number: PCT/JP2003/009388
(87) International publication number: WO 2004/018372

(56) References cited:
- EP-A1- 1 209 130
- JP-A- 2000 281 367
- US-A- 3 871 855
- US-A- 4 139 359
- US-A- 4 820 327
- US-A- 5 069 705

## Description

### Technical Field

This invention relates to a complex shape sheet glass forming method and apparatus, and particularly to a complex shape sheet glass forming method and apparatus suited to a side window glass of an automobile.

### Background Art

As methods for bending sheet glass, many methods of bending a sheet glass in a conveying direction while the sheet glass is pinched and carried by upper and lower straight rollers are known.

As a specific example, upper and lower straight rollers are disposed above and below each other separated by a gap approximately the same as the thickness of the sheet glass, and multiple such upper and lower straight rollers are arrayed so as to curve in a direction of advance of the sheet glass. That is, multiple straight rollers are arrayed on a conveying path formed in the shape of a curve. The method of bending a sheet glass heated to near its softening point in the conveying direction by pinching while conveying it with upper and lower straight rollers is known.

This bending method makes it possible to bend a sheet glass with a high forming accuracy, and also as continuous production is possible it offers excellent productivity.

A method for obtaining a complex shape glass by heating a sheet glass to near its softening point and then pinching this sheet glass with upper and lower curved rollers and bending the sheet glass in a conveying direction and a direction perpendicular to the conveying direction (hereinafter called "conveying face width direction") is also known.

This complex shape sheet glass forming method is proposed in for example JP-A-54-85217, titled "Method and Apparatus for Forming Sheet glass by Rolling", and JP-A-3-174334, titled "Machine and Method for Manufacturing a Curved Sheet Glass".

The complex shape forming method disclosed in JP-A-54-85217 will be described on the basis of Fig. 13A and Fig. 13B.

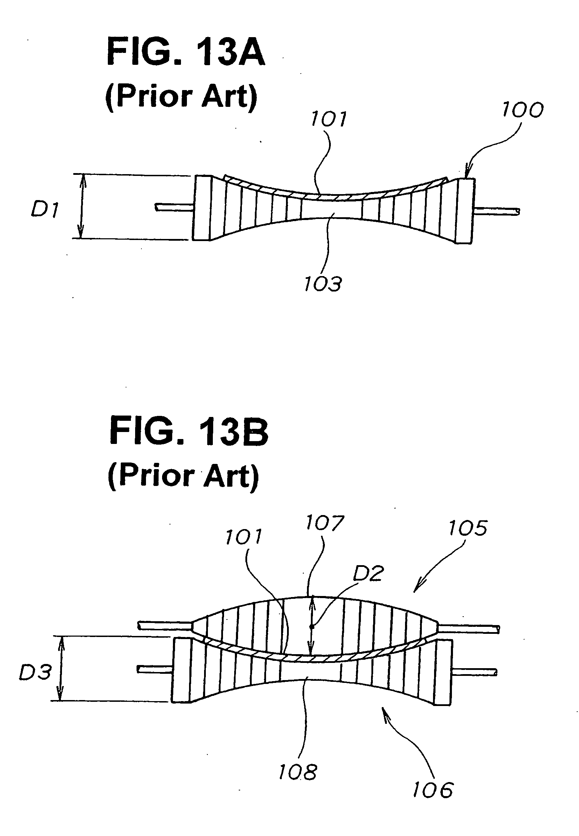

Multiple pre-forming rollers 100 of the kind shown in Fig. 13A are arrayed on a conveying path with a downward gradient so as to curve on the downstream side of a heating furnace, and a sheet glass 101 heated to near its softening temperature in the heating furnace is carried by the multiple pre-forming rollers 100. Each of the pre-forming rollers 100 is a concave forming roller waisted so as to curve from both ends toward a central part 103, and they are formed so that the degree of their curvature gradually increases with progress from upstream toward the downstream direction.

By the sheet glass 101 being carried along a curved conveying path the sheet glass 101 is preparatorily bent in the conveying direction, and with the multiple pre-forming rollers 100 having different degrees of curvature the sheet glass is gradually bent preparatorily in the conveying face width direction.

In Fig. 13B, multiple upper and lower forming rollers 105, 106 are arrayed on a conveying path with an uphill gradient downstream of the pre-forming rollers 100, and the preparatorily bent sheet glass 101 is pinched while carried by the multiple upper and lower forming rollers 105, 106.

Each of the upper forming rollers 105 is a convex forming roller bulging in a curve with progress from both its ends toward a central part 107. The upper forming rollers 105 are formed so that their degrees of curvature increase gradually in the downstream direction. Each of the lower forming rollers 106 is a concave forming roller waisted in a curve from both ends toward a central part 108. The lower forming rollers 106 are formed so that their degrees of curvature increase gradually in the downstream direction.

By the sheet glass 101 being pinched while carried between the upper and lower forming rollers 105, 106, the sheet glass 101 is bent further in the conveying direction and bent further in the conveying face width direction. The sheet glass 101 is formed into a complex shape glass.

However, with the technology of JP-A-54-85217, because rollers having their central parts waisted in a curve are used as pre-forming rollers, the maximum diameter D 1 of the pre-forming rollers is large and it is necessary for the roller pitch of the pre-forming rollers to be made large. And because consequently the distance of the conveying path for performing pre-forming becomes long, when this technology is applied to a thin sheet glass, a temperature drop of the sheet glass becomes large by the time the sheet glass 101 reaches the upper and lower forming rollers 105 and 106, and it becomes difficult for the thin sheet glass to be bent with good accuracy with the upper and lower forming rollers 105, 106.

Also, when the edges of the sheet glass 101 are positioned between rollers, the edges of the sheet glass 101 are supported in a cantilevered state, and the hot and soft sheet glass 101 droops easily under its own weight. Accordingly, it is necessary for the pitch between rollers to be made small to prevent this drooping.

However, in the technology of JP-A-54-85217, because the upper forming rollers 105 are formed convexly and the lower forming rollers 106 are formed concavely, the maximum diameter D2 of the upper forming rollers 105 and the maximum diameter D3 of the lower forming rollers 106 are large. Consequently, it is necessary for the inter-roller pitch of the forming rollers 105, 106 to be made large, and positions relatively far from the edges are supported by the upper and lower rollers. Because of this, there is a risk of the edge vicinities of the sheet glass 101 not being bent and remaining straight, and it becomes difficult for the front and rear sides of the sheet glass 101 to be bent with good accuracy.

On the other hand, in JP-A-3-174334, technology is proposed whereby upper and lower pipes themselves are curved to make curved rollers, and by a sheet glass heated to near its softening temperature being pinched while carried between these upper and lower curved rollers the sheet glass is bent in a conveying direction and a conveying face width direction simultaneously.

These curved rollers are curved pipes each made by holding a straight hollow metal pipe at both ends and pushing the ends to bend the hollow metal pipe to a curve. The curved roller rotates about the curved center axis of the pipe.

To rotate a curved pipe with a pushing force applied to both its ends while maintaining the curved shape of the curved pipe like this is difficult, and there is a possibility of the curved pipe decentering. When decentering accompanies rotation of a curved pipe, it becomes difficult to keep the spacing between upper and lower curved pipes fixed. Consequently, the spacing between the upper and lower curved pipes widens and narrows, and there is a risk of this leading to deterioration in sheet glass forming accuracy and leading to the occurrence of irregularities in the sheet glass surface.

Also, because a hollow metal pipe is bent to a curve by a pushing force being applied to the ends of the hollow metal pipe only, it is difficult to bend the hollow metal pipe to the required curved shape with good accuracy, and there is a risk of this leading to deterioration in sheet glass forming accuracy.

So, a method has been awaited with which it is possible to obtain a sheet glass complexly bent with high accuracy by bending a sheet glass accurately in a conveying direction and also bending the sheet glass accurately in its conveying face width direction.

### Disclosure of the Invention

The present invention provides a complex shape sheet glass forming method, including: a step of heating a horizontal sheet glass to near its softening temperature; a step of bending the sheet glass in a conveying direction by pinching while conveying the heated sheet glass with a plurality of straight rollers disposed above and below it; and a step of bending the sheet glass in a direction perpendicular to the conveying direction by pinching while conveying the sheet glass bent in the conveying direction with a convex forming roller with its center bulging in a curve and a concave forming roller with its center waisted in a curve, to obtain a complex shape glass.

Also, the invention provides a complex shape sheet glass forming apparatus for heating a horizontal sheet glass to near its softening temperature and then complexly bending this sheet glass with rollers in a conveying direction of the sheet glass and a direction perpendicular to the conveying direction, comprising: a first forming part having multiple upper and lower straight rollers disposed above and below the heated sheet glass for bending the sheet glass in the conveying direction by pinching while conveying the sheet glass; and a second forming part having a convex forming roller with its center bulging in a curve and a concave forming roller with its center waisted in a curve for forming a complex shape glass by bending the sheet glass bent in the conveying direction by these upper and lower straight rollers in the direction perpendicular to the conveying direction by pinching while conveying the sheet glass.

Here, with straight rollers, the roller diameter can be kept small compared to convex forming rollers and concave forming rollers described in related art. So, the bending of the sheet glass in the conveying direction is carried out with straight rollers. By using straight rollers in the first forming part like this, because it is possible to keep the roller pitch small, it is possible to make the conveying distance of the straight rollers short. Therefore, even when bending a thin sheet glass, it is possible to convey the sheet glass to the convex forming rollers and concave forming rollers constituting the second forming part with its temperature maintained.

Also, by using straight rollers in the first forming part and keeping the roller pitch small, it is possible to sandwich the edge vicinities of the sheet glass with the straight rollers and it is possible to bend the edges and the edge vicinities of the sheet glass with good accuracy in the conveying direction.

Then, by the sheet glass bent in the conveying direction being pinched while carried with the convex forming rollers and the concave forming rollers of the second forming part, the sheet glass is bent in a direction perpendicular to the conveying direction. By the sheet glass being bent in the direction perpendicular to the conveying direction by convex and concave forming rollers, the sheet glass can be bent in the direction perpendicular to the conveying direction with good accuracy.

Preferably, the convex forming rollers are made by arraying multiple segment rollers on a straight shaft, and the concave forming rollers are made by arraying multiple segment rollers on a straight shaft. In this case, the multiple segment rollers each rotate about the respective straight shaft with good accuracy, and for example it is possible to keep the gaps between the convex forming rollers and the concave forming rollers fixed.

Preferably, some or all of the multiple segment rollers are freely rotatable with respect to the respective straight shaft. In this case, even when the circumferential lengths of the multiple segment rollers differ, because the segment rollers rotate individually, the circumferential speeds of the segment rollers can be matched to the conveying speed of the sheet glass. As a result, abrasions caused by circumferential speed differences do not arise in the surface of the sheet glass.

Preferably, the respective curvatures of the complex shape glass in its conveying direction and the direction perpendicular to the conveying direction are of circular arc form and the radius of curvature in the conveying direction is set smaller than the radius of curvature in the direction perpendicular to the conveying direction. Because first the sheet glass is deeply bent in the conveying direction and then is shallowly bent in the direction perpendicular to the conveying direction, a complex shape glass can be formed just by adding one or two upper-lower pairs of bending rollers for bending in the direction perpendicular to the conveying direction to a bending apparatus of related art.

Preferably, in the forming of this invention, rapid cooling of the complex shape glass is carried out in a tempering part while the curved shape of the complex shape glass is maintained by it being pinched while carried further with upper and lower curved rollers. In this case, the entire lower face region of the complex shape glass is supported accurately by lower cooling part rollers and the entire upper face region of the complex shape glass is supported accurately by upper cooling part rollers as the complex shape glass is quenched.

### Brief Description of the Drawings

Fig. 1 is a perspective view showing an example of complex shape glasses formed by a complex shape sheet glass forming method according to the invention fitted as side windows glasses of a car;
Fig. 2 is a side view showing a complex shape sheet glass forming apparatus according to a first embodiment of the invention;
Fig. 3 is a perspective view of the complex shape forming apparatus shown in Fig. 2;
Fig. 4 is a front view showing a second forming part of the complex shape forming apparatus shown in Fig. 3;
Fig. 5 is an enlarged view of a part 5 shown in Fig. 4;
Fig. 6, Fig. 7, Fig. 8, Fig. 9 and Fig. 10 are views showing in order a complex shape sheet glass forming method according to the first embodiment of the invention;
Fig. 11 is a partially sectional front view showing a first convex forming roller and a first concave forming roller used in a second forming part of a complex shape sheet glass forming apparatus according to a second embodiment of the invention;
Fig. 12 is an enlarged view of a part 12 in Fig. 11; and
Fig. 13A and Fig. 13B are views showing a related art method for complexly curving a sheet glass.

### Best Mode for Conveying Out the Invention

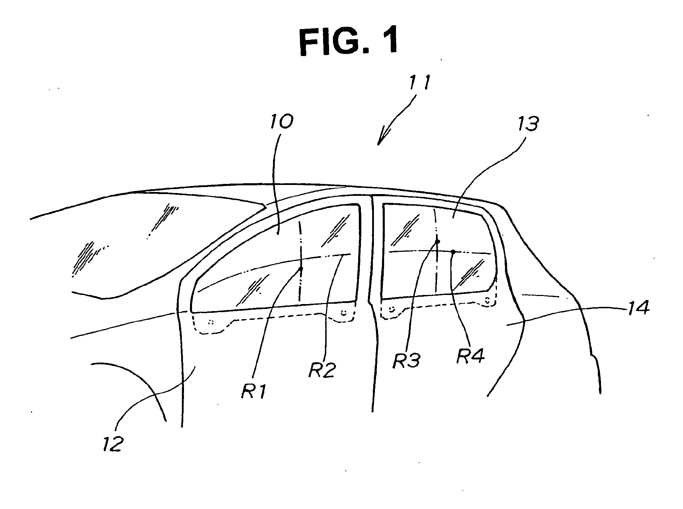

Fig. 1 shows an example of complex shape glasses formed by a complex shape sheet glass forming method according to the invention fitted as side window glasses of a car.

A complex shape glass 10 shown in Fig. 1 is a glass fitted to a front side door 12 of a car 11. This complex shape glass 10 is a glass bent to a single radius R1 in a longitudinal direction (a conveying direction of when curve formation is carried out) and bent to a single radius R2 in a cross direction (a direction perpendicular to the conveying direction) or bent complexly to a plurality of radii (for example a maximum radius R2a and a minimum radius R2b) in the cross direction.

In Fig. 1, a complex shape glass 10 bent to a single radius R2 in the cross direction is shown, and a maximum radius R2a and a minimum radius R2b are not shown.

Also, a complex shape glass 13 shown in Fig. 1 is a glass fitted to a rear door 14 of the car 11. This complex shape glass 13 is bent to a single radius R3 in the longitudinal direction (a conveying direction of when curve formation is carried out) and bent to a single radius R4 in a cross direction (a direction perpendicular to the conveying direction) or bent to a plurality of radii (for example a maximum radius R4a and a minimum radius R4b) in the cross direction.

In Fig. 1, a complex shape glass 13 bent to a single radius R4 in the cross direction (the direction perpendicular to the conveying direction) is shown, and a maximum radius R4a and a minimum radius R4b are not shown.

The radius R1 of the complex shape glass 10 and the radius R3 of the complex shape glass 13 are for example 1,500mm; however, there is no limitation to this.

When the complex shape glass 10 is bent to a single radius R2 in its cross direction, the single radius R2 is for example 15,000mm; however, there is no limitation to this.

When the complex shape glass 13 is bent to a single radius R4 in its cross direction, the single radius R4 is for example 30,000mm; however, there is no limitation to this.

In the following, a method and an apparatus for manufacturing the complex shape glass 10 by bending a sheet glass to a single radius R1 in a conveying direction and to a single radius R2 in a direction perpendicular to the conveying direction (hereinafter called "the conveying face width direction") will be described.

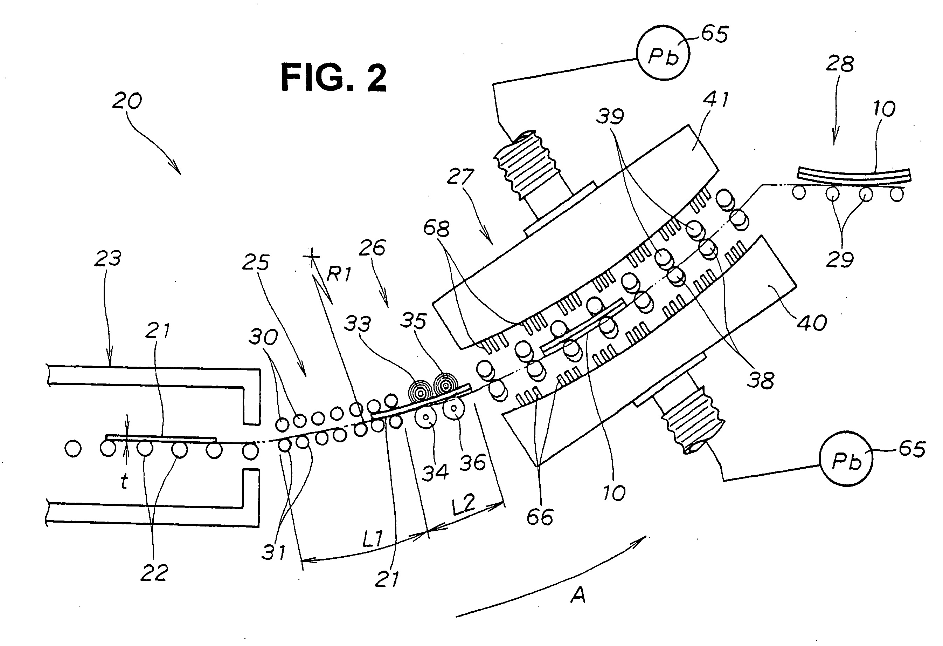

Fig. 2 to Fig. 10 illustrate a complex shape sheet glass forming apparatus according to a first embodiment of the invention.

Referring to Fig. 2, a complex shape sheet glass forming apparatus 20 is made up of a heating furnace 23 for heating a sheet glass 21 to near its softening point while conveying it horizontally with multiple rollers 22; a first forming part 25 for bending in a conveying direction (the arrow A direction) the sheet glass 21 having emerged from the heating furnace 23; a second forming part 26 for bending in the conveying face width direction the sheet glass 21 bent in this first forming part 25; a tempering part 27 for tempering by air cooling the complex shape glass 10 bent in the conveying face width direction in this second forming part 26; and a take-up part 28 for taking up the complex shape glass 10 tempered by air cooling in the tempering part 27.

The first forming part 25 has a conveying distance L1. Straight rollers 30, 31 of multiple sets constituting upper-lower pairs are disposed over the conveying distance L1. In this figure, an example is shown wherein seven sets of straight rollers 30, 31 are disposed with a predetermined spacing in the conveying direction on a circular arc of radius R1.

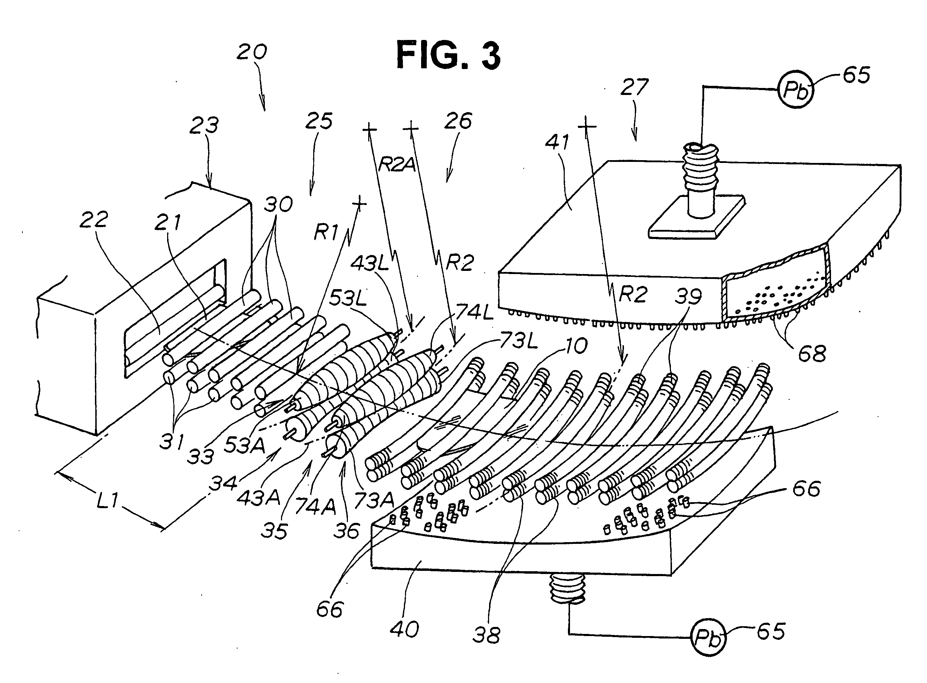

The radius R1 is an uphill gradient pointing upward from the horizontal plane of the heating furnace 23, but to show it in such a way that it is easy to understand it is drawn gently sloping in Fig. 2. Adjacent upper and lower straight rollers 30, 31 are actually set narrow, but in Fig. 3 to make the straight rollers 30, 31 easy to understand the roller spacing is shown relatively large.

The upper straight rollers 30 and the lower straight rollers 31 are connected to a rotary drive source not shown in the drawings. By this rotary drive source being driven, the upper and lower straight rollers 30, 31 are rotated and a sheet glass 21 pinched between the upper straight rollers 30 and the lower straight rollers 31 is carried.

As shown in Fig. 3, by using the straight rollers 30, 31 in the first forming part 25 it is possible to keep the adjacent roller pitch small, and the conveying distance L1 of the first forming part 25 can be kept short. When the conveying distance L1 is short, even when bending a thin sheet glass, the sheet glass is carried to the second forming part 26 with its temperature maintained, and the sheet glass can be bent with good accuracy in the conveying face width direction in the second forming part 26.

Also, when the roller pitch of the first forming part 25 is kept small, the edge vicinities of the sheet glass 21 are pinched surely by the upper and lower straight rollers 30, 31. Therefore, the edges and edge vicinities of the sheet glass 21 are bent with good accuracy in the conveying direction.

The second forming part 26 has a first convex forming roller 33 whose central part bulges in the form of a curve, a first concave forming roller 34 whose central part is waisted in a curve, a second convex forming roller 35 whose central part bulges in a curve, and a second concave forming roller 36 whose central part is waisted in a curve. The first convex forming roller 33 and the first concave forming roller 34, which form an upper-lower pair, constitute first forming rollers. The second convex forming roller 35 and the second concave forming roller 36, which form an upper-lower pair, constitute second forming rollers.

The sheet glass 21 bent in the conveying direction in the first forming part 25 is pinched while carried and bent in the conveying face width direction by the convex forming rollers 33, 35 and the concave forming rollers 34, 36.

When the bending of the sheet glass 21 in the conveying face width direction is small, the predetermined bending is carried out with the first forming rollers only.

The tempering part 27 has multiple lower tempering part curved rollers (lower curved rollers) 38, multiple upper tempering part curved rollers (upper curved rollers) 39, a lower tempering part nozzle box 40 disposed below the lower tempering part curved rollers 38, and an upper tempering part nozzle box 41 disposed above the upper tempering part curved rollers 39.

The lower tempering part curved rollers 38 and the upper tempering part curved rollers 39 are connected to a rotary drive source not shown in the figures, and by the rotary drive source being driven the tempering part curved rollers 38, 39 are rotated. The complex shape glass 10 is pinched and carried between the lower tempering part curved rollers 38 and the upper tempering part curved rollers 39.

By air being supplied from an air supply pump 65 to the lower tempering part nozzle box 40, this air is blown through multiple air nozzles 66 at the complex shape glass 10.

By air being supplied from the air supply pump 65 to the upper tempering part nozzle box 41, this air is blown through multiple air nozzles 68 at the complex shape glass 10.

That is, the complex shape glass 10 is air-cooled by the upper and lower nozzle boxes 41, 40.

The upper and lower tempering part curved rollers 39, 38 sandwich the complex shape glass 10. The upper and lower tempering part curved rollers 39, 38 are curved to a radius R2. These upper and lower tempering part curved rollers 39, 38 are disposed at a predetermined spacing along a conveying path of radius R1. Accordingly, the complex shape glass 10 is air-cooled while being held in a predetermined bent state and is manufactured with good accuracy.

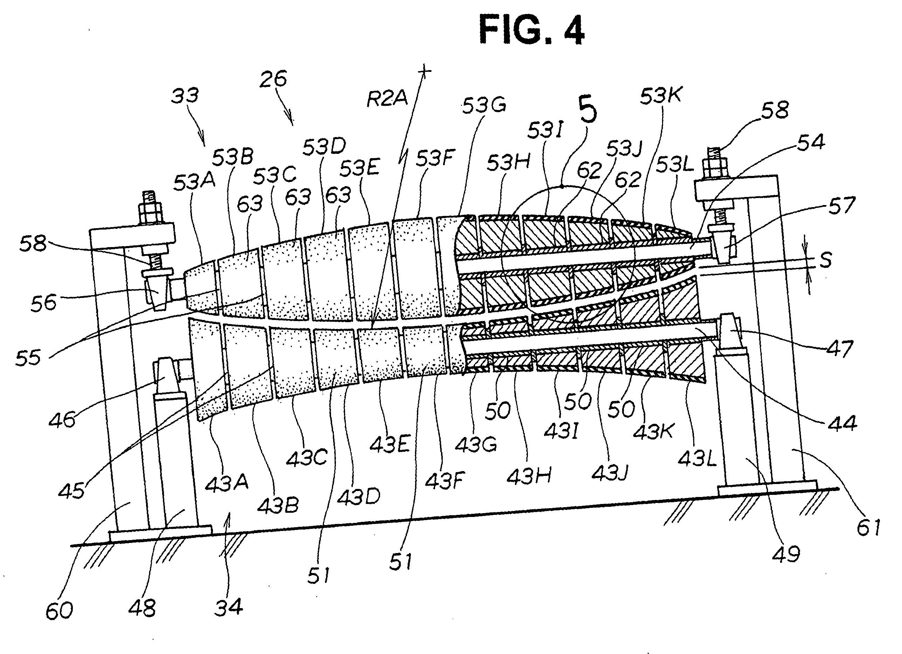

Fig. 4 shows the first convex forming roller 33 and the first concave forming roller 34 of the second forming part 26 shown in Fig. 3.

The first concave forming roller 34 is made up of multiple segment rollers, twelve segment rollers 43A to 43L in the embodiment shown in Fig. 4, and a straight shaft 44 on which the segment rollers 43A to 43L are fitted. The segment rollers 43A to 43L are arranged so that the central part narrows in a curve. Thrust plates 45 are interposed between the adjacent segment rollers 43A to 43L.

The straight shaft 44 is supported horizontally by having its left and right ends attached to left and right bearings 46, 47 provided on left and right support members 48, 49.

The segment rollers 43A to 43L are rotatably attached to the straight shaft 44 via bushes 50 provided on the straight shaft 44. By the multiple segment rollers 43A to 43L being fitted on the straight shaft 44, as a whole they form a curved circumferential surface (concave circumferential surface) of radius R2A.

The surfaces of the segment rollers 43A to 43L are covered with a heat-resistant covering material (band material or felt material) 51 such as for example Kevlar "registered trade mark of Dupont Co." (a para aramide fiber) and thereby made to have a cushion effect. By this means, the occurrence of defects such as contact marks in the surface of the complex shape glass 10 is prevented.

The first convex forming roller 33 is made up of multiple segment rollers, twelve segment rollers 53A to 53L in the embodiment shown in Fig. 4, and a straight shaft 54 on which the segment rollers 53A to 53L are fitted. The segment rollers 53A to 53L are arranged so that a central part protrudes in a curve. Thrust plates 55 are interposed between the adjacent segment rollers 53A to 53L.

The straight shaft 54 is supported horizontally by having its left and right ends attached to left and right bearings 56, 57 mounted on left and right support members 60, 61 via adjusting bolts 58, 58. The adjusting bolts 58, 58 raise and lower the first convex forming roller 33 to adjust the gap S between the first convex forming roller 33 and the first concave forming roller 34 to match the thickness t (see Fig. 2) of the sheet glass 21.

The segment rollers 53A to 53L are rotatably fitted on the straight shaft 54 via multiple bushes 62 provided on the straight shaft 54. By the multiple segment rollers 53A to 53L being fitted on the straight shaft 54, as a whole they form a circumferential surface with its central part curved convexly (a convex circumferential surface).

Here, the radius in the conveying face width direction of the first convex forming roller 33 is the value obtained by subtracting the thickness t of the complex shape glass 10 from the radius R2A of the first concave forming roller 34, i.e. R2A-t.

The surfaces of the segment rollers 53A to 53L are covered with a heat-resistant covering material (band material or felt material) 63 such as for example the above-mentioned Kevlar, and thereby made to have a cushion effect. By this means, the occurrence of defects such as contact marks in the surface of the complex shape glass 10 is prevented.

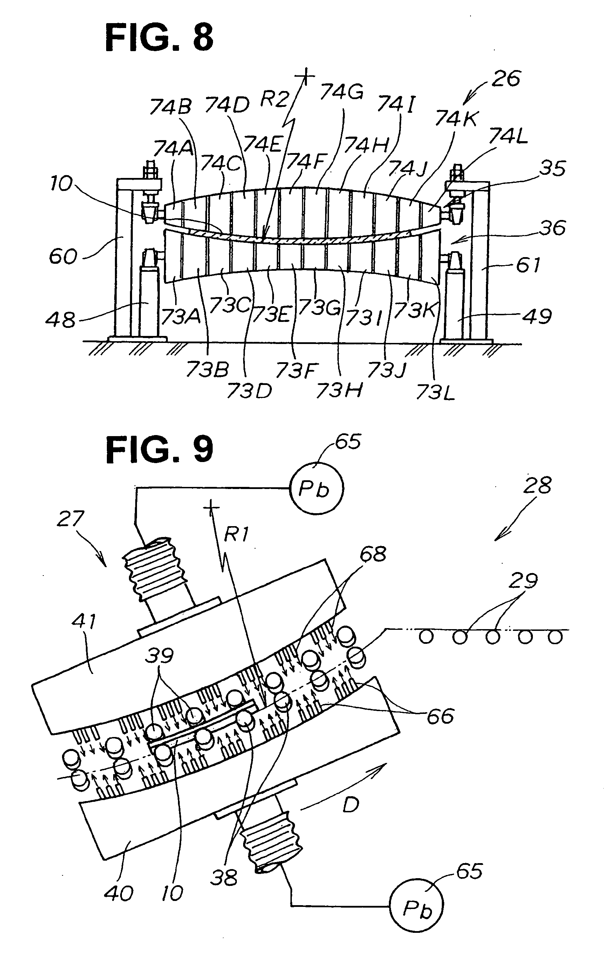

Returning to Fig. 3, the second concave forming roller 36 is of the same construction as the first concave forming roller 34, and has multiple segment rollers 73A to 73L (see Fig. 8). These segment rollers 73A to 73L are fitted on a straight shaft not shown in the drawings. The second concave forming roller 36 as a whole has a circumferential surface of radius R2 with its central part curved concavely (concave circumferential surface).

The second convex forming roller 35 is of the same construction as the first convex forming roller 33, and has multiple segment rollers 74A to 74L (see Fig. 8). These segment rollers 74A to 74L are fitted on a straight shaft not shown in the drawings. The second convex forming roller 35 as a whole has a circumferential surface with its central part curved convexly (convex circumferential surface).

Here, the conveying face width direction radius of the second convex forming roller 35 is the value obtained by subtracting the thickness t of the complex shape glass 10 from the radius R2 of the second concave forming roller 36, i.e. R2-t.

The radius R2A and the radius R2 are in the relationship radius R2A > radius R2. Consequently, the complex shape glass 10 is bent to about the middle of the target curvature by the first convex forming roller 33 and the first concave forming roller 34, and the complex shape glass 10 is bent to the shape of the target curvature by the second convex forming roller 35 and the second concave forming roller 36.

As a result of the segment rollers 53A to 53L and 43A to 43L of the first convex forming roller 33 and the first concave forming roller 34 being fitted on straight shafts 54, 44, the segment rollers 53A to 53L and 43A to 43L rotate with good accuracy about the straight shafts 54, 44.

As a result of the segment rollers 74A to 74L and 73A to 73L of the second convex forming roller 35 and the second concave forming roller 36 being fitted on straight shafts, the segment rollers 74A to 74L and 73A to 73L rotate with good accuracy about those straight shafts.

Therefore, the gap between the first convex forming roller 33 and the first concave forming roller 34 and the gap between the second convex forming roller 35 and the second concave forming roller 36 can be kept fixed, and the sheet glass 21 can be bent with good accuracy.

In the first embodiment, an example is shown wherein the second forming part 26 has first and second concave forming rollers 34, 36 and first and second convex forming rollers 33, 35; however, as another example, alternatively only the first convex forming roller 33 and the first concave forming roller 34, that is, the first forming rollers, may be provided. However, in this case, the complex shape glass 10 must be bent to the shape of the target curvature with just the first convex forming roller 33 and the first concave forming roller 34.

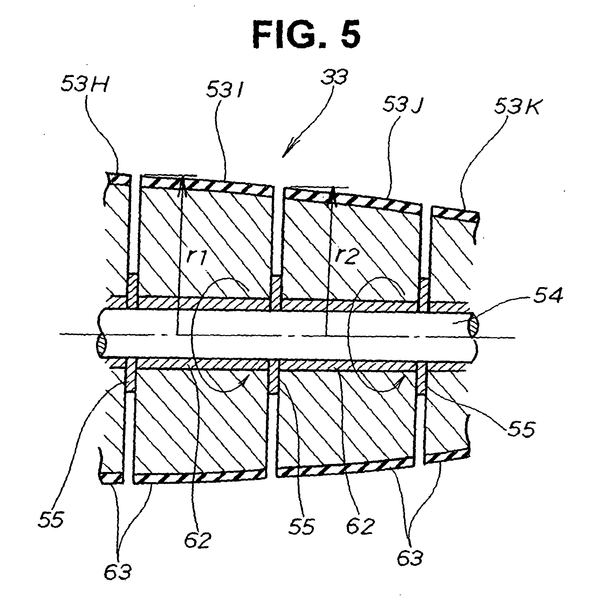

Fig. 5 shows a part of the first convex forming roller 33 shown in Fig. 4 enlarged.

When the maximum radius of the segment roller 53I is written r1, the circumference of the segment roller 53I is 2πr1. When the maximum radius of the segment roller 53J is written r2, the circumference of the segment roller 53J is 2πr2. The radius r1 and the radius r2 are in the relationship radius r1 > radius r2, and 2πr1 > 2πr2. Therefore, when the segment roller 53I and the segment roller 53J are rotated at the same angular speed in the direction of the arrows, the circumferential speed of the segment roller 53I and the circumferential speed of the segment roller 53J are different, and there is a risk of defects such as contact marks arising in the surface of the complex shape glass 10.

To avoid this, the segment rollers 53I, 53J are each freely rotatably fitted to the straight shaft 54, so that when the complex shape glass 10 contacts the surfaces of the segment rollers 53I, 53J, the circumferential speeds of the segment rollers 53I, 53J are each matched to the conveying speed of the complex shape glass 10. Consequently, defects such as contact marks caused by slip between the complex shape glass 10 and the segment rollers 53I, 53J are prevented from arising in the surface of the complex shape glass 10.

The first concave forming roller 34, the second convex forming roller 35 and the second concave forming roller 36 shown in Fig. 3 are also of the same construction as the first convex forming roller 33, and the same effects are obtained.

As a result of the segment rollers 53A to 53L and 43A to 43L constituting the first convex forming roller 33 and the first concave forming roller 34 of the second forming part 26 shown in Fig. 4 being rotatably fitted to the straight shafts 54 and 44, and the segment rollers 74A to 74L and 73A to 73L constituting the second convex forming roller 35 and the second concave forming roller 36 shown in Fig. 3 being respectively fitted rotatably to straight shafts not shown in the figures, there is no need for the second forming part 26 to have driving means for conveying the complex shape glass 10.

Because the second forming part 26 only has two sets of forming rollers disposed in the conveying path, the first forming rollers consisting of the upper-lower pair of the first convex forming roller 33 and the first concave forming roller 34 and the second forming rollers consisting of the upper-lower pair of the second convex forming roller 35 and the second concave forming roller 36, the conveying distance L2 (see Fig. 2) of the second forming part 26 can be kept relatively short. Therefore, the complex shape glass 10 is carried by utilizing the rotary driving force of the multiple straight rollers 30, 31 of the first forming part 25 disposed upstream of the second forming part 26 and the multiple tempering part curved rollers 38, 39 of the tempering part 27 disposed downstream of the second forming part 26.

However, in this invention, alternatively, the second forming part 26 may be provided with driving means, to convey the complex shape glass 10 positively.

Explaining this specifically, a construction is adopted such that rotary driving power can be transmitted from driving means through the straight shaft 44 to the two central segment rollers 43F, 43G positioned in the central part of the first concave forming roller 34 shown in Fig. 4, and the other segment rollers 43A to 43E and 43H to 43L are freely rotatably fitted to the straight shaft 44. Also, a construction is adopted such that rotary driving power can be transmitted from driving means through the straight shaft 54 to the two central segment rollers 53F, 53G positioned in the central part of the first convex forming roller 33, and the other segment rollers 53A to 53E, 53H to 53L are freely rotatably fitted to the straight shaft 54.

In this example also, when the complex shape glass 10 is carried by the rotary driving force of the central segment rollers 43F, 43G, 53F and 53G, the circumferential speeds of the other segment rollers 43A to 43E, 43H to 43L, 53A to 53E, 53H to 53L can be matched to the conveying speed of the complex shape glass 10, and defects such as contact marks caused by slip between the complex shape glass 10 and the segment rollers do not arise in the surface of the complex shape glass 10.

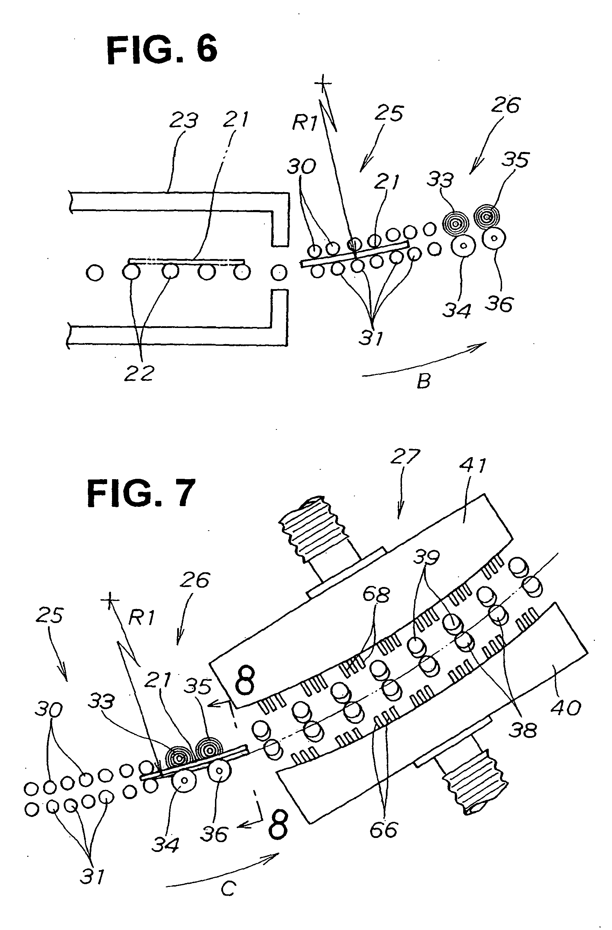

Next, a complex shape sheet glass forming method according to the first embodiment of the invention will be described with reference to Fig. 6 to Fig. 10.

In Fig. 6, while a sheet glass 21 in the heating furnace 23 is carried by the multiple rollers 22, the sheet glass 21 is heated to near its softening temperature. The heated sheet glass 21 is carried in the direction shown with the arrow B while being pinched by the multiple upper and lower straight rollers 30, 31 of the first forming part 25.

Because the multiple upper and lower straight rollers 30, 31 are disposed in the conveying direction with a predetermined spacing along a circular arc conveying path of radius R1, by being carried along the conveying path curving at the radius R1 the sheet glass 21 is bent so as to curve with the radius R1.

The sheet glass 21 bent in the conveying direction in the first forming part 25 is carried toward the second forming part 26. That is, it is carried as shown by the arrow C while being pinched by the first convex forming roller 33 and the first concave forming roller 34 of the second forming part 26 shown in Fig. 7.

At this time, by the first convex forming roller 33 and the first concave forming roller 34, which are first forming rollers, the sheet glass 21 is bent to a curved shape of about the middle of the target curved shape, i.e. to a circular arc shape of the radius R2A (see Fig. 3), in the conveying face width direction.

This sheet glass 21 bent to an intermediate degree is carried as shown by the arrow C while being pinched by the second convex forming roller 35 and the second concave forming roller 36, which are second forming rollers.

At this time, the sheet glass 21 is bent further by the second convex forming roller 35 and the second concave forming roller 36, and is bent to the shape of the target curvature, i.e. to a circular arc shape of radius R2 (see Fig. 3) in the conveying face width direction.

Thus, first, the sheet glass 21 is complexly bent by being bent in the conveying direction in the first forming part 25 and then being bent in the conveying face width direction in the second forming part 26.

Then, as shown in Fig. 8, a complex shape glass 10 is formed by the sheet glass 21 (see Fig. 7) being bent to a circular arc shape of radius R2 by the second convex forming roller 35 and the second concave forming roller 36.

In Fig. 9, the formed complex shape glass 10 is carried in the direction shown by the arrow D while being pinched by the lower tempering part curved rollers 38 and the upper tempering part curved rollers 39 of the tempering part 27.

Here, because the upper and lower tempering part curved rollers 39, 38 follow a circular arc of radius R2 (see Fig. 3), and these upper and lower tempering part curved rollers 39, 38 are disposed at a predetermined spacing along a circular arc of radius R1 (see Fig. 2 and Fig. 3), the complex shape glass 10 is held in the required bent shape as it is carried.

At this time, by air being supplied from the air supply pump 65 to the lower tempering part nozzle box 40, air is blown out toward the complex shape glass 10 through the multiple air nozzles 66 as shown with arrows. At the same time, by air being supplied from the air supply pump 65 to the upper tempering part nozzle box 41, air is blown out toward the complex shape glass 10 through the multiple air nozzles 68 as shown with arrows. The complex shape glass 10 is tempered by air-cooling while being held in the required bent shape.

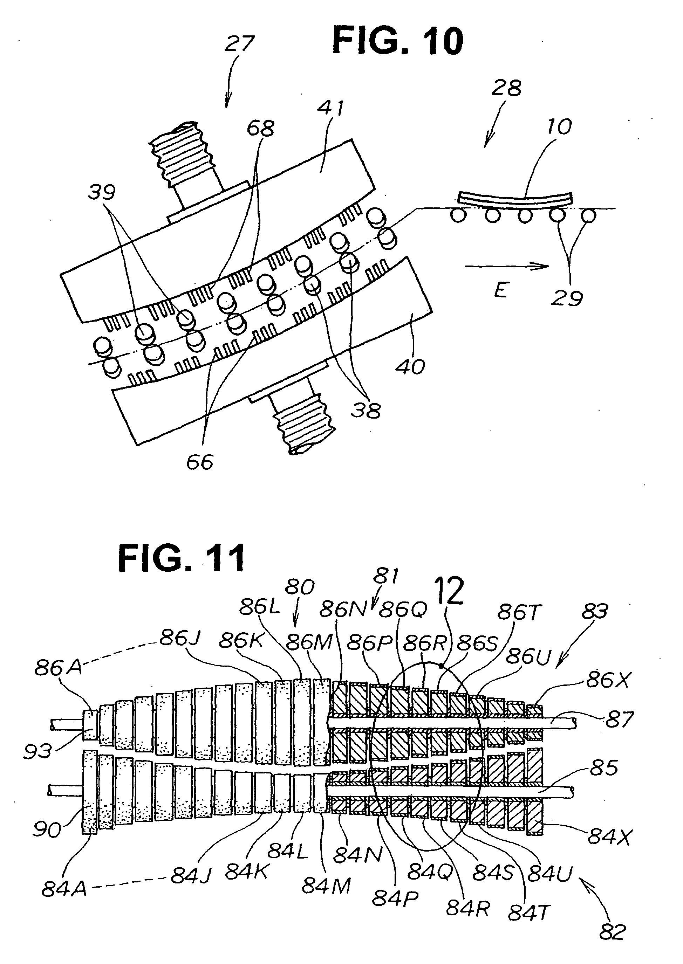

As shown in Fig. 10, the complex shape glass 10 tempered by air- cooling in the tempering part 27 is taken up by the take-up part 28 and carried in the arrow E direction by multiple rollers 29 of the take-up part 28.

Here, the respective curvatures of the complex shape glass 10 in the conveying direction and the conveying face width direction are circular arc shapes, and the conveying direction radius of curvature R1 is smaller than the conveying face width direction radius of curvature R2. Because the conveying direction radius of curvature R1 is smaller than the conveying face width direction radius of curvature R2, the complex shape glass 10 can be formed just by adding one or two pairs of conveying face width direction bending rollers to a bending apparatus of related art.

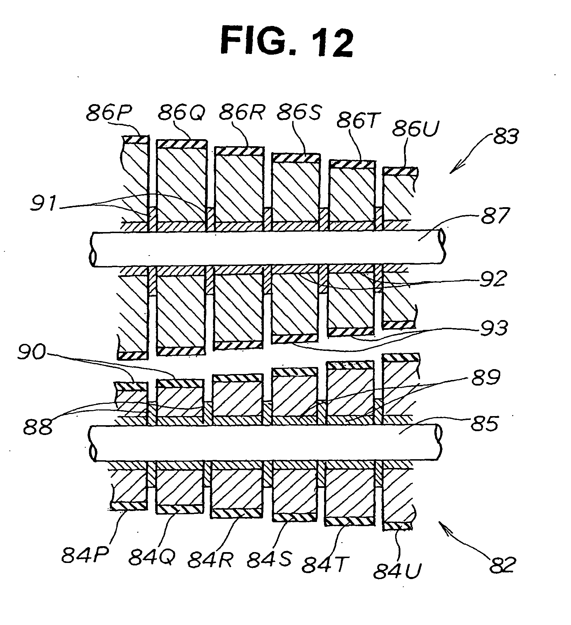

Next, a complex shape forming apparatus and method of a second embodiment of the invention will be described with reference to Figs. 11 and 12.

A complex shape sheet glass forming apparatus 80 according to a second embodiment shown in Fig. 11 differs from the first embodiment only in that its second forming part 81 is made up of a first concave forming roller 82 and a first convex forming roller 83 and a second concave forming roller and a second convex forming roller not shown in the drawings, and the rest of its construction is the same as that of the first embodiment.

The first concave forming roller 82 has tubular ring rollers (segment rollers) 84A to 84X of different diameters rotatably fitted to a straight shaft 85. By the width of the ring rollers 84A to 84X being made narrow, the ring rollers 84A to 84X can be made cylindrical in shape.

Of the tubular ring rollers 84A to 84X of different diameters, small-diameter ring rollers 84L, 84M are disposed centrally, and the other ring rollers 84A to 84K and 84N to 84X are disposed so that their diameters gradually increase from the center toward the left and right ends. By this means, a first concave forming roller 82 having an approximately curved shape with the central part of the first concave forming roller 82 made concave is obtained.

The first convex forming roller 83 has tubular ring rollers (segment rollers) 86A to 86X of different diameters rotatably fitted to a straight shaft 87. By the width of the ring rollers 86A to 86X being made narrow, the ring rollers 86A to 86X can be made cylindrical in shape.

Of the tubular ring rollers 86A to 86X of different diameters, large-diameter ring rollers 86L, 86M are disposed centrally, and the other ring rollers 86A to 86K and 86N to 86X are disposed so that their diameters gradually decrease from the center toward the left and right ends. By this means, a first convex forming roller 83 having an approximately convex curved shape with the central part of the first convex forming roller 83 bulging convexly is obtained.

As shown in Fig. 12, the first concave forming roller 82 has thrust plates 88 interposed between the adjacent ring rollers 84A to 84X (only 84P to 84U are shown). Each of the ring rollers 84A to 84X is rotatably (freely) fitted to the straight shaft 85 by way of a bush 89.

Each of the ring rollers 84A to 84X has around its periphery a heat-resistant covering material (band material or felt material) 90 such as for example Kevlar, and is thereby given a cushion effect. Defects such as contact marks are thereby prevented from arising in the surface of the complex shape glass 10.

The first convex forming roller 83 has thrust plates 91 interposed between the adjacent ring rollers 86A to 86X (only 86P to 86U are shown). Each of the ring rollers 86A to 86X is rotatably (freely) fitted to the straight shaft 87 by way of a bush 92.

Each of the ring rollers 86A to 86X has around its periphery a heat-resistant covering material (band material or felt material) 93 such as for example Kevlar, and is thereby given a cushion effect. Defects such as contact marks are thereby prevented from arising in the surface of the complex shape glass 10.

Here, the second concave forming roller and the second convex forming roller also are of the same construction as the first concave forming roller 82 and the first convex forming roller 83. Therefore, in the second embodiment also, the same effects as those of the first embodiment are obtained.

Although in the first and second embodiments an example was described wherein the complex shape glass 10 was tempered by air-cooling in a tempering part 27, there is no limitation to this, and it is also possible to cool the complex shape glass 10 gradually by blowing air at it weakly.

Also, although in the first and second embodiments examples were described wherein the shape of the complex shape glass 10 is such that its conveying direction curvature is the same radius R1 and its curvature in the direction perpendicular to the conveying direction is the same radius R2 and there is the relationship radius R1 < radius R2, there is no need for limitation to radius R1 < radius R2.

Furthermore, whereas in the complex shape glass 10 of the first and second embodiments examples were described wherein the curvature in the direction perpendicular to the conveying direction was bent to a circular arc of a single radius R2, the curvature in the direction perpendicular to the conveying direction is not limited to a circular arc. That is, the curvature in the direction perpendicular to the conveying direction of the complex shape glass 10 may alternatively be a shape curved complexly to a plurality of radii, and in short may be any curved shape.

### Industrial Applicability

By using multiple straight rollers on a curved conveying path and making the pitch between the rollers short and thereby making the conveying distance of the straight rollers short, even when bending a thin sheet glass it is possible to convey the sheet glass to the next bending step with its temperature maintained and it is possible to bend the sheet glass with good accuracy in a conveying direction and a direction perpendicular to the conveying direction. Because of this, the invention is useful in for example manufacturing complex shape glass having different radii of curvature longitudinally and across. For example it is useful in the manufacture of window glasses used in cars and the like.

## Claims

1. A complex shape sheet glass forming method, including:
a step of heating a horizontal sheet glass (21) to near its softening temperature;
a step of bending the sheet glass (21) in a conveying direction by pinching while conveying the heated sheet glass (21) with a plurality of straight rollers (30,31) disposed above and below it; and
a step of bending the sheet glass (21) in a direction perpendicular to the conveying direction by pinching while conveying the sheet glass (21) bent in the conveying direction with a convex forming roller (33) with its center bulging in a curve and a concave forming roller (34) with its center waisted in a curve, to obtain a complex shape glass (10).

2. A complex shape sheet glass forming method as claimed in claim 1, wherein the convex forming roller (33) comprises multiple segment rollers (53A to 53L) arrayed on a straight shaft (54) and the concave forming roller (34) comprises multiple segment rollers (43A to 43L) arrayed on a straight shaft (44).

3. A complex shape sheet glass forming method as claimed in claim 2, wherein some or all of the multiple segment rollers (53A to 53L, 43A to 43L) are freely rotatable with respect to the respective straight shaft (54,44).

4. A complex shape sheet glass forming method as claimed in any preceding claim, wherein the respective curvatures of the complex shape glass (10) in the conveying direction and the direction perpendicular to the conveying direction are of circular arc form and the radius of curvature in the conveying direction is smaller than the radius of curvature in the direction perpendicular to the conveying direction.

5. A complex shape sheet glass forming method as claimed in any preceding claim, further including a step of quenching the complex shape glass (10) while maintaining the curved shape of the complex shape glass (10) by pinching while conveying it further with upper and lower curved rollers (38,39).

6. A complex shape sheet glass forming apparatus for heating a horizontal sheet glass (21) to near its softening temperature and then complexly bending this sheet glass (21) with rollers in a conveying direction of the sheet glass (21) and a direction perpendicular to the conveying direction, comprising:
a first forming part (25) having multiple upper and lower straight rollers (30,31) disposed above and below the heated sheet glass (21) for bending the sheet glass (21) in the conveying direction by pinching while conveying the sheet glass (21); and
a second forming part (26) having a convex forming roller (33) with its center bulging in a curve and a concave forming roller (34) with its center waisted in a curve for forming a complex shape glass (10) by bending the sheet glass (21) bent in the conveying direction by the upper and lower straight rollers (30,31) in the direction perpendicular to the conveying direction by pinching while conveying the sheet glass (21).

7. A complex shape sheet glass forming apparatus as claimed in claim 6, wherein the convex forming roller (33) comprises multiple segment rollers (53A to 53L) arrayed on a straight shaft (54) and the concave forming roller (34) comprises multiple segment rollers (43A to 43L) arrayed on a straight shaft (44).

8. A complex shape sheet glass forming apparatus as claimed in claim 7, wherein some or all of the multiple segment rollers (53A to 53L, 43A to 43L) are freely rotatable with respect to the respective straight shaft (54, 55).

9. A complex shape sheet glass forming apparatus as claimed in any of claims 6, 7 or 8, so constructed that the respective curvatures of the complex shape glass (10) in the conveying direction and the direction perpendicular to the conveying direction are formed in a circular arc shape and so constructed that the radius of curvature of the complex shape glass (10) in the conveying direction is smaller than the radius of curvature in the direction perpendicular to the conveying direction.

10. A complex shape sheet glass forming apparatus as claimed in any of claims 6 to 9, further comprising a tempering part (27) for quenching the complex shape glass (10) formed with the convex forming roller (33) and the concave forming roller (34) while maintaining the shape of the complex shape glass (10) by pinching while conveying it with curved rollers (38,39).

## Patentansprüche

1. Verfahren zur Bildung von Komplexformglasscheiben, umfassend:
einen Schritt des Erhitzens einer horizontalen Glasscheibe (21) bis nahe an ihre Erweichungstemperatur;
einen Schritt des Biegens der Glasscheibe (21) in eine Förderrichtung durch Drücken während des Förderns der erhitzten Glasscheibe (21) mit einer Mehrzahl von geraden Walzen (30, 31), die oberhalb und unterhalb derselben angeordnet sind; und
einen Schritt des Biegens der Glasscheibe (21) in eine Richtung senkrecht zu der Förderrichtung durch Drücken während des Förderns der Glasscheibe (21), die in der Förderrichtung mit einer konvexen formgebenden Walze (33), deren Mitte sich in einer Krümmung wölbt, und einer konkaven formgebenden Walze (34), deren Mitte in einer Krümmung tailliert ist, gebogen wird, um ein Komplexformglas (10) zu erhalten.

2. Verfahren zur Bildung von Komplexformglasscheiben nach Anspruch 1, wobei die konvexe formgebende Walze (33) mehrere Segmentwalzen (53A bis 53L) umfasst, welche auf einer geraden Welle (54) aufgereiht sind und die konkave formgebende Walze (34) mehrere Segmentwalzen (43A bis 43L) umfasst, welche auf einer geraden Welle (44) aufgereiht sind.

3. Verfahren zur Bildung von Komplexformglasscheiben nach Anspruch 2, wobei einige oder alle der mehreren Segmentwalzen (53A bis 53L, 43A bis 43L) frei drehbar in Bezug auf die entsprechenden geraden Wellen (54, 44) sind.

4. Verfahren zur Bildung von Komplexformglasscheiben nach einem der vorhergehenden Ansprüche, wobei die entsprechenden Krümmungen des Komplexformglases (10) in der Förderrichtung und der Richtung senkrecht zu der Förderrichtung von einer kreisförmigen Bogenform sind und der Radius der Krümmung in Förderrichtung kleiner ist als der Radius der Krümmung in der Richtung senkrecht zu der Förderrichtung.

5. Verfahren zur Bildung von Komplexformglasscheiben nach einem der vorhergehenden Ansprüche, das ferner einen Schritt des Abkühlens des Komplexformglases (10) umfasst, wobei die gekrümmte Form des Komplexformglases (10) durch Drücken, während des Weiterförderns mit oberen und unteren gekrümmten Walzen (38, 39), aufrechterhalten wird.

6. Vorrichtung zur Bildung von Komplexformglasscheiben zur Erhitzung einer horizontalen Glasscheibe (21) bis nahe an ihre Erweichungstemperatur und dann komplexes Biegen dieser Glasscheibe (21) mit Walzen in einer Förderrichtung der Glasscheibe (21) und einer Richtung senkrecht zu der Förderrichtung, umfassend: einen ersten formgebenden Teil (25), der mehrere obere und untere gerade Walzen (30, 31) aufweist, die oberhalb und unterhalb der erhitzten Glasscheibe (21) angeordnet sind, um die Glasscheibe (21) in Förderrichtung durch Drücken während des Förderns der Glasscheibe (21) zu biegen; und
einen zweiten formgebenden Teil (26), der eine konvexe formgebende Walze (33) aufweist, deren Mitte sich in einer Krümmung wölbt, und
eine konkave formgebende Walze (34), deren Mitte in einer Krümmung tailliert ist, um ein Komplexformglas (10) durch Biegen der Glasscheibe (21), die in der Förderrichtung durch obere und untere gerade Walzen (30, 31) gebogen wird, in der Richtung senkrecht zu der
Förderrichtung, durch Drücken während des Förderns der Glasscheibe (21), zu formen.

7. Vorrichtung zur Bildung von Komplexformglasscheiben nach Anspruch 6, wobei die konvexe formgebende Walze (33) mehrere Segmentwalzen (53A bis 53L) umfasst, die auf einer geraden Welle (54) aufgereiht sind, und die konkave formgebende Walze (34) mehrere Segmentwalzen (43A bis 43L) umfasst, die auf einer geraden Welle (44) aufgereiht sind.

8. Vorrichtung zur Bildung von Komplexformglasscheiben nach Anspruch 7, wobei einige oder alle der mehreren Segmentwalzen (53A bis 53L, 43A bis 43L) frei drehbar in Bezug auf die entsprechenden geraden Wellen (54, 44) sind.

9. Vorrichtung zur Bildung von Komplexformglasscheiben nach einem der Ansprüche 6, 7 oder 8, die so konstruiert ist, dass die entsprechenden Krümmungen des Komplexformglases (10) in der Förderrichtung und der Richtung senkrecht zu der Förderrichtung in einer kreisförmigen Bogenform geformt sind und das der Radius der Krümmung des Komplexformglases (10) in der Förderrichtung kleiner ist als der Radius der Krümmung in der Richtung senkrecht zu der Förderrichtung.

10. Vorrichtung zur Bildung von Komplexformglasscheiben nach einem der Ansprüche 6 bis 9, die ferner einen temperierenden Teil (27) zum Abkühlen des Komplexformglases (10) umfasst, das mit der konvexen formgebenden Walze (33) und der konkaven formgebenden Walze (34) geformt ist, wobei die Form des Komplexformglases (10) durch Drücken, während des Förderns mit gekrümmten Walzen (38, 39), aufrechterhalten wird.

## Revendications

1. Procédé de formage de verre à vitre de forme complexe comprenant :
une étape consistant à chauffer un verre à vitre horizontal (21) jusqu'à environ sa température de ramollissement ;
une étape consistant à bomber le verre à vitre (21) dans un sens de transport en pinçant le verre à vitre chauffé (21) pendant son transport à l'aide d'une pluralité de rouleaux cylindriques (30, 31) disposés au-dessus et en dessous de celui-ci ; et
une étape consistant à bomber le verre à vitre (21) dans un sens perpendiculaire au sens de transport en pinçant le verre à vitre (21) pendant son transport à l'aide d'un rouleau de formage convexe (33) avec son centre bombé formant une courbe et un rouleau de formage concave (34) avec son centre rétréci formant une courbe pour obtenir un verre de forme complexe (10).

2. Procédé de formage de verre à vitre de forme complexe selon la revendication 1, dans lequel le rouleau de formage convexe (33) comprend des rouleaux à segments multiples (53A à 53L) agencés sur un arbre droit (54) et le rouleau de formage concave (34) comprend des rouleaux à segments multiples (43A à 43L) agencés sur un arbre droit (44).

3. Procédé de formage de verre à vitre de forme complexe selon la revendication 2, dans lequel certains des ou tous les rouleaux à segments multiples (53A à 53L, 43A à 43L) peuvent tourner librement par rapport à l'arbre droit respectif (54, 44).

4. Procédé de formage de verre à vitre de forme complexe selon une quelconque revendication précédente, dans lequel les courbures respectives du verre à vitre de forme complexe (10) dans le sens de transport et dans le sens perpendiculaire au sens de transport ont une forme d'arc circulaire et le rayon de courbure dans le sens de transport est inférieur au rayon de courbure dans le sens perpendiculaire au sens de transport.

5. Procédé de formage de verre à vitre de forme complexe selon une quelconque revendication précédente comprenant, en outre, une étape consistant à tremper le verre à vitre de forme complexe (10) tout en conservant la forme incurvée du verre à vitre de forme complexe (10) en le pinçant tout en continuant de le transporter à l'aide de rouleaux bombés supérieurs et inférieurs (38, 39).

6. Dispositif de formage de verre à vitre de forme complexe pour chauffer un verre à vitre horizontal (21) jusqu'à environ sa température de ramollissement, puis pour bomber ce verre à vitre (21) de manière complexe avec des rouleaux dans un sens de transport du verre à vitre (21) et dans un sens perpendiculaire au sens de transport, comprenant :
une première partie de formage (25) comprenant de multiples rouleaux droits supérieurs et inférieurs (30, 31) disposés au-dessus et en dessous du verre à vitre chauffé (21) pour bomber le verre à vitre (21) dans le sens de transport en pinçant le verre à vitre (21) pendant son transport ; et
une deuxième partie de formage (26) comportant un rouleau de formage convexe (33) avec son centre bombé formant une courbe et un rouleau de formage concave (34) avec son centre rétréci formant une courbe pour former un verre de forme complexe (10) en bombant le verre à vitre (21) bombé dans le sens de transport par les rouleaux droits supérieurs et inférieurs (30, 31) dans le sens perpendiculaire en pinçant le verre à vitre (21) pendant le transport.

7. Dispositif de formage de verre à vitre de forme complexe selon la revendication 6, dans lequel le rouleau de formage convexe (33) comprend des rouleaux à segments multiples (53A à 53L) agencés sur un arbre droit (54) et le rouleau de formage concave (34) comprend des rouleaux à segments multiples (43A à 43L) agencés sur un arbre droit (44).

8. Dispositif de formage de verre à vitre de forme complexe selon la revendication 7, dans lequel certains des ou tous les rouleaux à segments multiples (53A à 53L, 43A à 43L) peuvent tourner librement par rapport à l'arbre droit respectif (54, 55).

9. Dispositif de formage de verre à vitre de forme complexe selon l'une quelconque des revendications 6, 7 ou 8, construit de telle manière que les courbures respectives du verre à vitre de forme complexe (10) dans le sens de transport et dans le sens perpendiculaire au sens de transport aient une forme d'arc circulaire et construit de telle manière que le rayon de courbure du verre à vitre de forme complexe (10) dans le sens de transport soit inférieur au rayon de courbure dans le sens perpendiculaire au sens de transport.

10. Dispositif de formage de verre à vitre de forme complexe selon l'une quelconque des revendications 6 à 9, comprenant, en outre, une partie de trempe (27) pour tremper le verre de forme complexe (10) formé avec le rouleau de formage convexe (33) et le rouleau de formage concave (34) tout en conservant la forme du verre à vitre de forme complexe (10) en le pinçant tout en le transportant à l'aide de rouleaux bombés supérieurs et inférieurs (38, 39).
